# EUROPEAN PATENT APPLICATION

(11) **EP 4 537 977 A1**
(43) Date of publication of application: **16.04.2025**
(21) Application number: 24188506.0
(22) Date of filing: 15.07.2024
(51) Int. Cl.: B23Q 9/00, B24B 19/26, B25J 11/00

(54) **SYSTEM FOR SURFACE MACHINING A CURVED PART**

(30) Priority: 09.10.2023 US 202318483351
(71) Applicant: The Boeing Company, Arlington, VA 22202 (US)
(72) Inventor: Weber, Tobias, Arlington, 22202 (US); Koettner, Lars S., Arlington, 22202 (US)
(74) Representative: Witte, Weller & Partner Patentanwälte mbB

(57) **Abstract**

A system for surface machining of a preferably curved part, the system including a chassis, a first and second roller, and a cutting tool. The first and second rollers each being coupled to the chassis and configured to contact the surface of a curved part. The cutting tool is disposed between the first and second rollers and coupled to the chassis such that a distance between the cutting tool and the chassis is adjustable. (Fig. 5)

## Description

### FIELD

This disclosure relates to systems and methods for surface machining. More specifically, the disclosed embodiments relate to surface machining of a curved part.

### INTRODUCTION

During the assembly of structural components, e.g., in aircraft production, certain gap dimensions between joined components must not be exceeded. Accordingly, the machining of such components requires tight profile tolerances. However, it is challenging for these tight tolerances to be accomplished with known manufacturing processes. Instead, the components often feature undesirable manufacturing artifacts on their surfaces. This leads to rework and manual removal of the artifacts to achieve the desired tolerance. Accordingly, improvements to this rework process would increase the precision of the manufactured parts and decrease the negative impacts on workers.

### SUMMARY

The present disclosure provides systems, apparatuses, and methods relating to surface machining of a curved part.

In some examples, a system for surface machining of a curved part includes: a chassis; a first roller and a second roller, wherein the first and second rollers are each coupled to the chassis and configured to contact a surface of the curved part; and a cutting tool coupled to the chassis and disposed between the first and second rollers; wherein a distance between the cutting tool and the chassis is adjustable.

In some examples, an autonomous system for surface machining a part includes: a C-shaped chassis configured to wrap around an edge of the part, such that a first portion of the chassis is disposed on a first surface of the part and a second portion of the chassis is disposed on a second surface of the part, the second surface being a reverse side of the first surface; a first roller and a second roller each coupled to the first portion of the chassis and configured to contact the first surface; a third roller and a fourth roller each coupled to the second portion of the chassis and configured to contact the second surface; and a cutting tool disposed between the first and second rollers and coupled to the first portion of the chassis via an actuator, wherein the system is configured such that a distance between the cutting tool and the first portion of the chassis is adjustable using the actuator.

In some examples, a method of machining the surface of a curved part, the method comprises: positioning a cutting tool at a location on a surface of the curved part, wherein the cutting tool is coupled to a chassis and disposed between a first roller and a second roller; adjusting a distance between the cutting tool and the chassis based on a desired curvature or profile of the surface at the location of the cutting tool; and causing the surface to comply with the desired curvature or surface profile by removing a portion of the curved part using the cutting tool.

Features, functions, and advantages may be achieved independently in various embodiments of the present disclosure, or may be combined in yet other embodiments, further details of which can be seen with reference to the following description and drawings.

### BRIEF DESCRIPTION OF THE DRAWINGS

Fig. 1 is a perspective view of an illustrative curved part in accordance with aspects of the present disclosure.
Fig. 2 is a schematic view of the curved part of Fig. 1.
Fig. 3 is a schematic diagram of a system for machining the surface of the curved part of Fig. 1.
Fig. 4 is a schematic diagram depicting the system of Fig. 3.
Fig. 5 is a schematic diagram depicting the system of Fig. 3.
Fig. 6 is a schematic diagram of an illustrative belt sander for use with the system of Fig. 3.
Fig. 7 depicts an example of the machining process of the system of Fig. 3.
Fig. 8 depicts an example of the machining process of the system of Fig. 3.
Fig. 9 depicts an example of the machining process of the system of Fig. 3.
Fig. 10 is a side elevation view of a handheld embodiment of the system of Fig. 3.
Fig. 11 is a front elevation view of the handheld embodiment of Fig. 10.
Fig. 12A is a schematic diagram of a robotic embodiment of the system of Fig. 3 having five rollers and one cutting tool.
Fig. 12B is a cross section view depicting portions of the robotic embodiment of Fig. 12A.
Fig. 13A is a schematic diagram of a robotic embodiment of the system of Fig. 3 having four rollers and two cutting tools.
Fig. 13B is a cross section view depicting portions of the robotic embodiment of Fig. 13A.
Fig. 14 is a perspective view of an autonomous embodiment of the system of Fig. 3.
Fig. 15 is a flow chart depicting steps of an illustrative method for surface machining a curved part according to the present teachings.

### DETAILED DESCRIPTION

Various aspects and examples of systems for the surface machining of curved parts, as well as related methods, are described below and illustrated in the associated drawings. Unless otherwise specified, a system for the surface machining of curved parts in accordance with the present teachings, and/or its various components, may contain at least one of the structures, components, functionalities, and/or variations described, illustrated, and/or incorporated herein. Furthermore, unless specifically excluded, the process steps, structures, components, functionalities, and/or variations described, illustrated, and/or incorporated herein in connection with the present teachings may be included in other similar devices and methods, including being interchangeable between disclosed embodiments. The following description of various examples is merely illustrative in nature and is in no way intended to limit the disclosure, its application, or uses. Additionally, the advantages provided by the examples and embodiments described below are illustrative in nature and not all examples and embodiments provide the same advantages or the same degree of advantages.

This Detailed Description includes the following sections, which follow immediately below: (1) Definitions; (2) Overview; (3) Examples, Components, and Alternatives; (4) Advantages, Features, and Benefits; and (5) Conclusion. The Examples, Components, and Alternatives section is further divided into subsections, each of which is labeled accordingly.

### Definitions

The following definitions apply herein, unless otherwise indicated.

"Comprising," "including," and "having" (and conjugations thereof) are used interchangeably to mean including but not necessarily limited to, and are open-ended terms not intended to exclude additional, unrecited elements or method steps.

Terms such as "first", "second", and "third" are used to distinguish or identify various members of a group, or the like, and are not intended to show serial or numerical limitation.

"AKA" means "also known as," and may be used to indicate an alternative or corresponding term for a given element or elements.

"Elongate" or "elongated" refers to an object or aperture that has a length greater than its own width, although the width need not be uniform. For example, an elongate slot may be elliptical or stadium-shaped, and an elongate candlestick may have a height greater than its tapering diameter. As a negative example, a circular aperture would not be considered an elongate aperture.

"Coupled" means connected, either permanently or releasably, whether directly or indirectly through intervening components.

"Resilient" describes a material or structure configured to respond to normal operating loads (e.g., when compressed) by deforming elastically and returning to an original shape or position when unloaded.

"Rigid" describes a material or structure configured to be stiff, non-deformable, or substantially lacking in flexibility under normal operating conditions.

"Elastic" describes a material or structure configured to spontaneously resume its former shape after being stretched or expanded.

"Processing logic" describes any suitable device(s) or hardware configured to process data by performing one or more logical and/or arithmetic operations (e.g., executing coded instructions). For example, processing logic may include one or more processors (e.g., central processing units (CPUs) and/or graphics processing units (GPUs)), microprocessors, clusters of processing cores, FPGAs (field-programmable gate arrays), artificial intelligence (Al) accelerators, digital signal processors (DSPs), and/or any other suitable combination of logic hardware.

A "controller" or "electronic controller" includes processing logic programmed with instructions to carry out a controlling function with respect to a control element. For example, an electronic controller may be configured to receive an input signal, compare the input signal to a selected control value or setpoint value, and determine an output signal to a control element (e.g., a motor or actuator) to provide corrective action based on the comparison. In another example, an electronic controller may be configured to interface between a host device (e.g., a desktop computer, a mainframe, etc.) and a peripheral device (e.g., a memory device, an input/output device, etc.) to control and/or monitor input and output signals to and from the peripheral device.

Directional terms such as "up," "down," "vertical," "horizontal," and the like should be understood in the context of the particular object in question. For example, an object may be oriented around defined X, Y, and Z axes. In those examples, the X-Y plane will define horizontal, with up being defined as the positive Z direction and down being defined as the negative Z direction.

"Providing," in the context of a method, may include receiving, obtaining, purchasing, manufacturing, generating, processing, preprocessing, and/or the like, such that the object or material provided is in a state and configuration for other steps to be carried out.

In this disclosure, one or more publications, patents, and/or patent applications may be incorporated by reference. However, such material is only incorporated to the extent that no conflict exists between the incorporated material and the statements and drawings set forth herein. In the event of any such conflict, including any conflict in terminology, the present disclosure is controlling.

### Overview

In general, a system for the surface machining of a curved part comprises a machining system for the precise removal of material from the surface of curved parts or components to manufacture a defined curvature or surface profile along a curvature.

Curved components often feature undesirable manufacturing flaws or artifacts on their surfaces, and these artifacts can be divided into short-wave, e.g., local surface irregularities, and long-wave deviations, e.g., larger irregularities in the overall curvature. Short-wave deviations are especially impactful on the resulting resilience of the joined components as they can result in an impermissible level of stress concentrations in the joined components. Therefore, a rework process is performed on the surfaces of the parts prior to final assembly. During this rework process, material protrusions/irregularities are removed. This process is typically done manually, e.g., by workers with handheld sanders, as the elasticity of the typically large, thin-walled components in combination with flexible clamping can cause deflection during a machining operation. This manual rework process can be laborious, time consuming, ergonomically unfriendly (e.g., due to neck flexion and wrist pronation), and imprecise.

Machining systems of the present disclosure are configured to machine the surface of curved parts to remove surface irregularities and ensure the surface of the part conforms to the desired curvature or surface profile along the curvature. In general, machining systems of the present disclosure are configured to be translated across the surface of a curved part such that a cutting tool removes material from the surface. In some examples, the machining systems may be passed over the same portion of the surface several times to ensure curvature conformation, smoothness, and/or surface profile along the curvature.

These machining systems include a plurality of rollers and at least one cutting tool (e.g., a cylindrical cutting tool, milling tool, sanding tool, and/or grinding tool) disposed between two rollers of the plurality of rollers, the rollers and cutting tool(s) being attached to a chassis structure. In some examples, the cutting tool features a translational position control (e.g., using active controlled servo drives) having single degree of freedom to adjust the tool infeed. In some examples, the rollers have at least one translational degree of freedom, e.g., along the roller axes. In some examples, the rollers have at least one additional translational degree of freedom, e.g., perpendicular to the roller axes.

In some examples, machining systems of the present disclosure include a sensor system. The sensor system may comprise one or more load cells configured to measure a force imparted on the roller(s) and/or cutting tool(s), e.g., by surface irregularities of the curved part. In some examples, the distance between the chassis and the roller(s) and/or the cutting tool(s) is configured to be automatically adjusted in response to the measured force and/or displacement. Additionally, or alternatively, the sensor system may comprise one or more position sensors configured to measure a position of the machining system. The position sensors may be external to and separate from the chassis. For example, the position sensors may be disposed at a location in the surrounding workspace, i.e., external to the system and the curved part. In some examples, the distance between the cutting tool(s) and the chassis may be configured to be automatically adjusted based on a measured location of the cutting tool relative to the curved part in the workspace, as measured by the one or more position sensors.

In some examples, the sensor system may include one or more vision sensors, such that the location of the cutting tool may be at least partially determined by the vision sensors. For example, one or more visual cues may be detected by the one or more vision sensors to determine the relative location of the cutting tool with respect to the curved part in the workspace. In some examples, the visual cues may comprise one or more visual code technologies such as a quick response (QR) code, a barcode, and/or other symbols. In some examples, the visual cues may comprise one or more tracking markers, for example, utilized in conjunction with a motion tracking system. In some examples, the vision sensors may utilize an edge detection algorithm for detecting the edge of the curved part. The one or more vision sensors may be external to and separate from the chassis.

In some examples, machining systems of the present disclosure may be utilized in conjunction with one or more motion guidance systems. For example, the machining systems may be coupled to a jig configured to follow a rail system or a flexible track, a robotic arm, and/or other motion guidance systems. Accordingly, machining systems described herein may be embodied as a handheld device, e.g., for manual operation, a robotic end effector for machine-guided operation, and/or a fully autonomous system.

### Examples, Components, and Alternatives

The following sections describe selected aspects of illustrative systems and tools for the surface machining of curved parts as well as related systems and/or methods. The examples in these sections are intended for illustration and should not be interpreted as limiting the scope of the present disclosure. Each section may include one or more distinct embodiments or examples, and/or contextual or related information, function, and/or structure.

### A. Illustrative System for the Surface Machining of Curved Parts

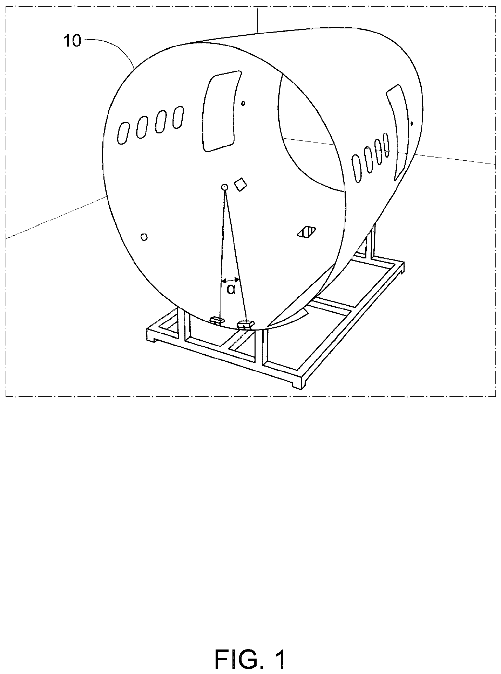

As shown in Figs. 1-9, this section describes an illustrative system 100 for the surface machining of curved parts. System 100 is an example of the machining systems described above.

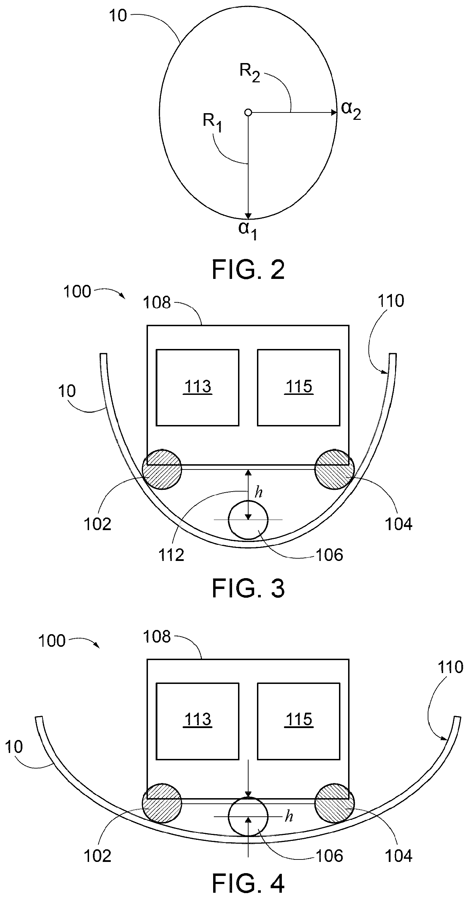

Figs. 1 and 2 depict an example of a curved part 10. Curved part 10 may have a non-circular (e.g., oval) contour. In some examples, curved part 10 has a closed contour, e.g., with a continuous change in curvature. In some examples, such as shown in Fig. 2, curved part 10 may have a first radius R₁ when measured at a first angle α₁ (e.g., at 0 degrees) and a different second radius R₂ when measured at a second angle α₂ (e.g., at 90 degrees). Accordingly, system 100 is configured to have a variable radius of curvature such that the surface of curved part 10 may be machined to conform to a defined surface profile and/or thickness along the non-circular contour.

With respect to Figs. 3-6, system 100 includes two rollers, namely a first roller 102 and a second roller 104, and a cutting tool 106. Cutting tool 106 is disposed between rollers 102 and 104. In some examples, cutting tool 106 is disposed at a midpoint between the first and second rollers. Rollers 102, 104 and cutting tool 106 are each coupled to a common chassis 108 and configured to contact a surface 110 of a curved part, such as curved part 10. A height (i.e., a distance) h between cutting tool 106 and chassis 108 is adjustable by an actuator 112. Accordingly, the radius of curvature machined by system 100 is selectively variable. In some examples, height h between the cutting tool and the chassis is configured to be adjustable in a direction normal to surface 110 of the curved part.

First and second rollers 102 and 104 may be cylindrical; however, other rolling support systems may be utilized, such as spherical rollers, ball bearings, continuous track traction belts, etc. In some examples, at least one of first roller 102 and/or second roller 104 is coupled to chassis 108 via a corresponding actuator, such that a distance between the respective roller and the chassis is adjustable.

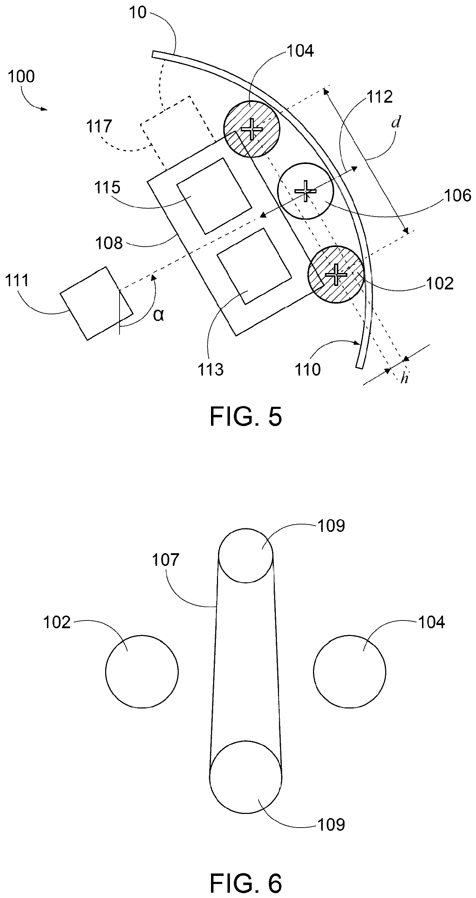

In some examples, cutting tool 106 is a cylindrical cutting tool. Additionally, or alternatively, the cutting tool may comprise a rotating cutting tool. For example, cutting tool 106 may include a milling tool, a grinding tool, etc., depending on the application and user preference. In some examples, cutting tool 106 includes an abrasive cutting tool. In the example depicted in Fig. 6, cutting tool 106 may include a belt sanding device having a continuous, abrasive belt 107, e.g., driven by one or more active and/or passive drum rollers 109 and/or other suitable driving mechanism.

As described above, actuator 112 is configured to facilitate adjustment of the distance between the cutting tool and the chassis. Accordingly, actuator 112 is utilized to adjust the radius of curvature of system 100 is configured to machine. In some examples, actuator 112 comprises a linear actuator. In some examples, actuator 112 is a pneumatic actuator. In some examples, actuator 112 comprises a servo drive. The servo drive may be configured to be actively controlled. Additionally, or alternatively, actuator 112 may comprise an actively controlled electromagnetic spindle assembly.

System 100 may further comprise a controller 113 configured to operate actuator 112. In some examples, controller 113 comprises an electronic controller configured to selectively adjust the distance between the cutting tool and the chassis. Controller 113 may be disposed in or on the chassis.

In some examples, at least one of first roller 102 and/or second roller 104 is coupled to a sensor system 115. For example, sensor system 115 may comprise one or more load cells configured to measure a force imparted by a surface irregularity of the curved part. Additionally, or alternatively, the sensor system may comprise one or more position sensors configured to measure a height of the roller(s) or another distance of the roller(s) from a reference point.

Cutting tool 106 may be coupled to sensor system 115. Accordingly, cutting tool 106 may be coupled to one or more load cells configured to measure a force imparted on the cutting tool by a surface irregularity of the curved part. In some examples, the distance between the cutting tool and the chassis is configured to be automatically adjusted by the actuator in response to the measured force and/or displacement. Additionally, or alternatively, cutting tool 106 may be coupled to one or more position sensors, e.g., encoders, configured to measure a height of the cutting tool, e.g., relative to the chassis, the curved part, or both.

System 100 may additionally include one or more position sensors configured to track the location of system 100 with respect to the curved part and/or the surrounding workspace, also referred to as a tracking system 111. The tracking system may be external to and separate from the chassis. For example, the tracking system may be disposed within the surrounding workspace, i.e., external to the system and the curved part. Height *h* between the cutting tool and the chassis may be configured to be automatically adjusted based on a measured location of the cutting tool relative to the curved part in the workspace, as measured by the tracking system. In some examples, this location may be referred to as the global location or the tool location.

In some examples, system 100 includes one or more vision sensors and the location of the cutting tool may be at least partially determined by the one or more vision sensors. For example, one or more visual cues may be detected by the one or more vision sensors to determine the relative location of the cutting tool with respect to the curved part in the workspace. In some examples, the visual cues may comprise one or more visual code technologies such as a quick response (QR) code, a barcode, and/or other symbols. In some examples, the visual cues may comprise one or more tracking markers, for example, utilized in conjunction with a motion tracking system. In some examples, the vision sensors may utilize an edge detection algorithm for detecting the edge of the curved part. The one or more vision sensors may be external to and separate from the chassis.

In some examples, system 100 includes a jig 117 (see Fig. 5), e.g., configured to follow a rail system, such that the system is guided along the rail system. Additionally, or alternatively, the jig may be configured to follow a flexible track, such that the system is guided along the flexible track.

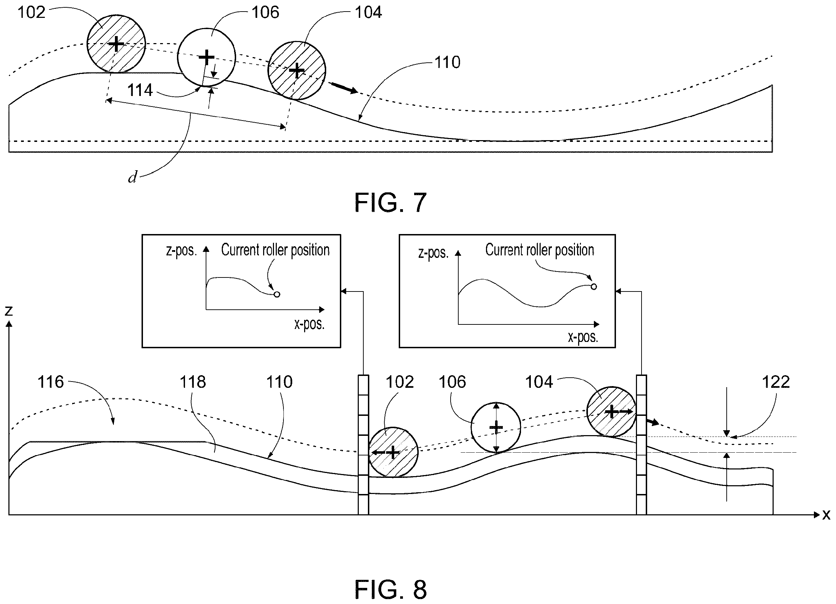

Turning to Figs. 7-9, an example of the surface machining of curved part 10 with system 100 is shown. Surface irregularities of curved part 10 are exaggerated for illustration.

As shown in Fig. 7, cutting tool 106 cuts into curved part 10 by a depth of cut 114. Depth of cut 114 is determined by the distance *d* between the rollers, the height *h* of the cutting tool, the irregularities of the surface of curved part 10, as well as the sizes/diameters of the cutting tool and the rollers. Accordingly, if system 100 is passed over the surface of curved part 10, for example, a plurality of times (e.g., a pre-defined number of times), the surface of part 10 will be gradually machined to the radius defined by the position of the cutting tool and rollers. Furthermore, by adjusting the positions of the rollers and/or the cutting tool in concert with the above-mentioned position sensor(s), the radius of curvature or surface profile machined by system 100 may be set for different locations of curved part 10, such as R₁ at angle α₁ and R₂ at second angle α₂ (see Figs. 2-4).

With respect to Fig. 8, an example of a machined portion 116 of curved part 10 is shown. After an initial pass of cutting tool 106, machined portion 116 has had a portion of the surface irregularity removed by cutting tool 106. In the example depicted in Fig. 8, the machined portion comprises a sacrificial material layer 118 of curved part 10.

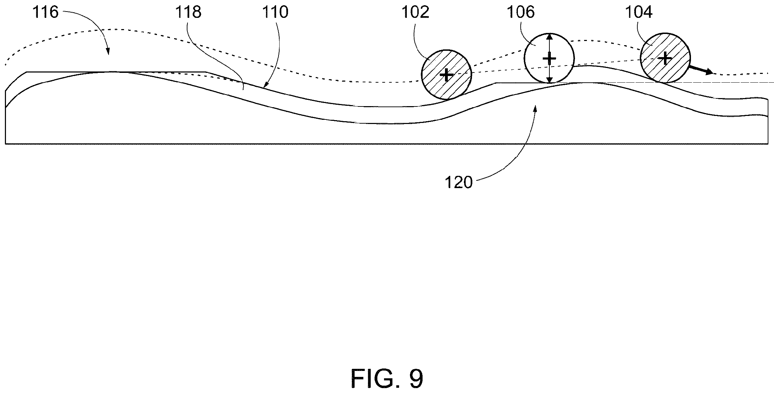

With reference to Fig. 9, an example of the continued machining of curved part 10 is shown, in which a portion 120 of sacrificial material layer 118 is partially removed by cutting tool 106. Accordingly, by passing system 100 over surface irregularities, the surface irregularities can be removed, such that the resulting surface conforms with the desired curvature and/or desired surface profile. In some examples, the desired surface profile may be a uniform surface profile (e.g., locally flat). Additionally, by adjusting the relative distance d between the rollers, along with height h of the cutting tool, the radius of the curvature or the surface profile of the machined portion can be controlled.

In some example, rollers 102 and 104 and/or cutting tool 106 may include measurement functionality (e.g., with one or more sensors) configured to detect the surface profile (e.g. by measuring the distance of the rotation axis to a fixed reference point on the curved part and/or the surrounding workspace). Detected profile can be used standalone or in combination with a data set from a previous optical measurement. Based on that data the tool infeed can be controlled by a positioning (e.g., micro positioning) of cutting tool 106. Based on that data a max tool infeed 122 (see Fig. 8) can be set, if only a limited amount of material removal is permitted (e.g. limited thickness of the sacrificial material layer). To position the tool, an actively controlled electromagnetic spindle can be utilized, e.g., actuator 112. The spindle could be used for closed loop force control if only a limited process load is permitted.

### B. First Illustrative Example of a System for the Surface Machining of Curved Parts

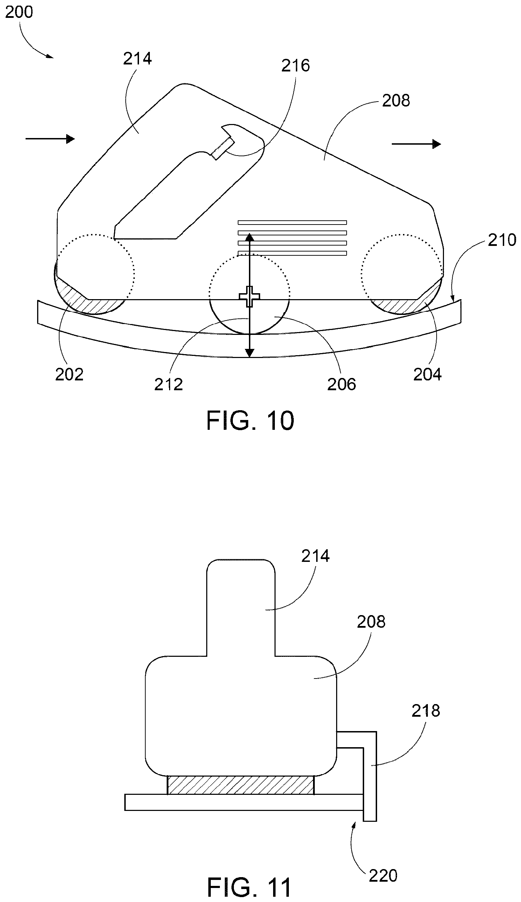

As shown in Figs. 10 and 11, this section describes a first system 200, which is an example of system 100 described above.

As with system 100 described above, system 200 includes two rollers, a first roller 202 and a second roller 204, and a cutting tool 206. Cutting tool 206 is disposed between rollers 202 and 204. In some examples, cutting tool 206 is disposed at a midpoint between the first and second rollers. Rollers 202, 204 and cutting tool 206 are each coupled to a chassis 208 and configured to contact a surface 210 of a curved part, such as curved part 10. A height (i.e., a distance) h between the cutting tool and the chassis is adjustable by an actuator 212. In some examples, height h between the cutting tool and the chassis is configured to be adjustable in a direction normal to surface 210 of the curved part. System 200 further includes a handle 214 for handheld operation, e.g., by a user of system 200, and a switch 216 configured to selectively power one or more components of the system.

First and second rollers 202 and 204 may comprise cylindrical rollers, however other rolling systems may be utilized, such as spherical rollers, ball bearings, continuous track traction belts, etc. In some examples, at least one of first roller 202 and/or second roller 204 may be coupled to chassis 208 via a corresponding actuator, such that a distance between the respective roller and the chassis is adjustable.

In some examples, at least one of first roller 202 and/or second roller 204 is coupled to a sensor system. For example, the sensor system may comprise one or more load cells configured to measure a force imparted by a surface irregularity of the curved part. Additionally, or alternatively, the sensor system may comprise one or more position sensors configured to measure a roller displacement.

Cutting tool 206 may be coupled to a sensor system, for example the same sensor system as the roller(s) and/or another sensor system. Accordingly, cutting tool 206 may be coupled to one or more load cells configured to measure a force imparted on the cutting tool by a surface irregularity of the curved part. Additionally, or alternatively, cutting tool 206 may be coupled to one or more position sensors configured to measure a displacement of the cutting tool, e.g., relative to the chassis, the curved part, or both.

System 200 may additionally include one or more position sensors configured to track the location of system 200 with respect to the curved part and/or the surrounding workspace, such as tracking system 111, described above. The tracking system may be external to and separate from the chassis. For example, the tracking system may be disposed at a location within the surrounding workspace, i.e., external to the system and the curved part. Height h between the cutting tool and the chassis may be configured to be automatically adjusted based on a measured location of the cutting tool relative to the curved part in the workspace, as measured by the tracking system.

With respect to Fig. 11., system 200 may include a lateral stop 218 configured to follow an edge 220 of the curved part during operation of the system, such that cutting tool 206 maintains a select, consistent distance from edge 220.

In some examples, system 100 includes a jig., e.g., configured to follow a rail system, such that the system is guided along the rail system. Additionally, or alternatively, the jig may be configured to follow a flexible track, such that the system is guided along the flexible track.

As with cutting tool 106 of system 100, cutting tool 206 of system 200 is configured to cut into curved part 10 by an adjustable depth of cut. The depth of cut being determined by the distance between the rollers, the height of the cutting tool, as well as the sizes/diameters of the cutting tool and the rollers.

Accordingly, by passing system 200 over surface irregularities, the surface irregularities can be removed, such that the resulting surface conforms with the desired curvature and/or desired surface profile. In some examples, the desired surface profile may be a uniform surface profile (e.g., locally flat).. Additionally, by adjusting the relative distance between the rollers, along with height of the cutting tool, the radius of the curvature or surface profile of the machined portion can be controlled. Accordingly, if system 200 is passed over the surface of curved part 10 a plurality of times (e.g., a pre-defined number of times), the surface of part 10 will be gradually machined to the radius defined by the position of the cutting tool and rollers. Furthermore, by adjusting the positions of the rollers and/or the cutting tool in concert with the above-mentioned position sensor(s), the radius of curvature machined by system 200 may be set for different locations of curved part 10, such as R₁ at angle α1 and R₂ at second angle α₂.

### C. Second Illustrative Example of a System for the Surface Machining of Curved Parts

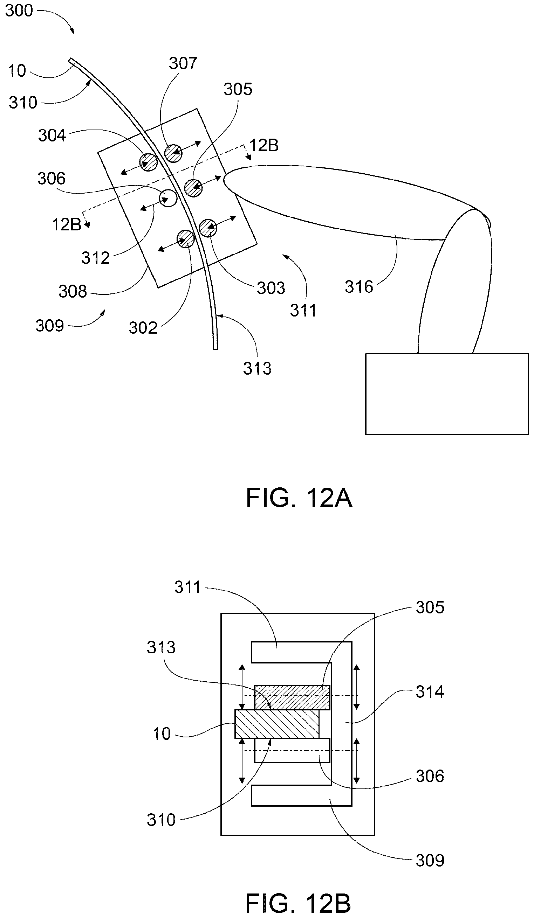

As shown in Figs. 12A and 12B, this section describes a second illustrative example system 300 of a system for the surface machining of curved parts. System 300 is an example of system 100 described above.

As with system 100 described above, system 300 includes a first roller 302 and a second roller 304, and a cutting tool 306, with cutting tool 306 being disposed between rollers 302 and 304. Additionally, system 300 includes a third roller 303, a fourth roller 305, and a fifth roller 307, with rollers 303, 305, and 307 being located on the opposing surface (i.e., the opposite side) of curved part 10. In some examples, cutting tool 206 is disposed at a midpoint between the first and second rollers and roller 305 is disposed directed opposite cutting tool 206 as shown in Fig. 12A. Rollers 303, 305, and 307 provide support for the portion of the curved part being machined, thereby preventing unwanted deflections of the curved part.

Rollers 302 and 304 and cutting tool 306 are each coupled to a first side 309 of chassis 308 and configured to contact a first surface 310 of the curved part. Rollers 303, 305, and 307 are each coupled to a second side 311 of chassis 308 and configured to contact a second surface 313 the curved part. In some examples, the chassis is a C-shaped chassis (see Fig. 12B), having a central portion 314 disposed along the outside edge of the curved part and from which first side 309 of the chassis extends along first surface 310 and second side 311 of the chassis extends along second surfaces 313.

As with system 100, a height (i.e., a distance) *h* between the cutting tool and the chassis is adjustable by an actuator 312. In some examples, height h between the cutting tool and the chassis is configured to be adjustable in a direction normal to surface 310 of the curved part.

The rollers may comprise cylindrical rollers, however other rolling systems may be utilized, such as spherical rollers, ball bearings, continuous track traction belts, etc. In some examples, at least one of the rollers may be coupled to chassis 308 via a corresponding actuator, such that a distance between the respective roller and the chassis is adjustable.

In some examples, at least one the rollers is coupled to a sensor system. For example, the sensor system may comprise one or more load cells configured to measure a force imparted by a surface irregularity of the curved part. Additionally, or alternatively, the sensor system may comprise one or more position sensors configured to measure a roller displacement.

As with system 100, cutting tool 306 may be coupled to a sensor system, for example the same sensor system as the roller(s) and/or another sensor system. Accordingly, cutting tool 306 may be coupled to one or more load cells configured to measure a force imparted on the cutting tool by a surface irregularity of the curved part. Additionally, or alternatively, cutting tool 306 may be coupled to one or more position sensors configured to measure a displacement of the cutting tool, e.g., relative to the chassis, the curved part, or both.

System 300 may additionally include one or more position sensors configured to track the location of system 300 with respect to the curved part and/or the surrounding workspace, such as tracking system 111, described above. The tracking system may be external to and separate from the chassis. For example, the tracking system may be disposed at a location within the surrounding workspace, i.e., external to the system and the curved part. Height *h* between the cutting tool and the chassis may be configured to be automatically adjusted based on a measured location of the cutting tool relative to the curved part in the workspace, as measured by the tracking system.

As with cutting tool 106 of system 100, cutting tool 306 of system 300 is configured to cut into curved part 10 by an adjustable depth of cut. The depth of cut being determined by the distance between the rollers, the height of the cutting tool, as well as the sizes/diameters of the cutting tool and the rollers.

Accordingly, by passing system 300 over surface irregularities, the surface irregularities can be removed, such that the resulting surface conforms with the desired curvature and/or desired surface profile. In some examples, the desired surface profile may be a uniform surface profile (e.g., locally flat).. Additionally, by adjusting the relative distance between the rollers, along with height of the cutting tool, the radius of the curvature or surface profile of the machined portion can be controlled. Accordingly, if system 300 is passed over the surface of curved part 10 a plurality of times (e.g., a pre-defined number of times), the surface of part 10 will be gradually machined to the radius defined by the position of the cutting tool and rollers. Furthermore, by adjusting the positions of the rollers and/or the cutting tool in concert with the above-mentioned position sensor(s), the radius of curvature or surface profile machined by system 300 may be set for different locations of curved part 10, such as R₁ at angle α1 and R₂ at second angle α₂.

System 300 is coupled to a motion system 316 configured to control / position the system along the curved part. In some examples, the motion system comprises a robotic arm, e.g., a robotic arm having six degrees of freedom. In some examples, the motion system may comprise a collaborative robot (AKA a "cobot" system) or other suitable motion system(s).

### D. Third Illustrative Example of a System for the Surface Machining of Curved Parts

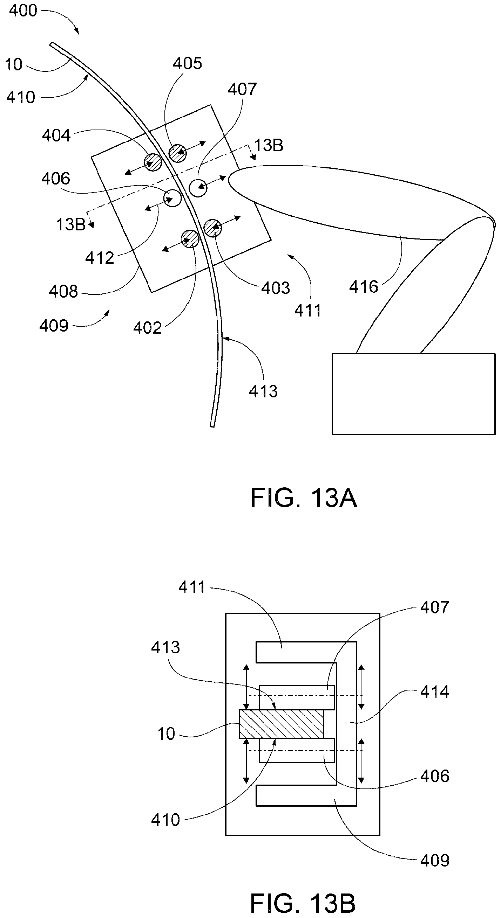

As shown in Figs. 13A and 13B, this section describes a third illustrative example system 400 of a system for the surface machining of curved parts. System 400 is an example of system 100 described above.

As with system 100 described above, system 400 includes a first roller 402 and a second roller 404, and a cutting tool 406, with cutting tool 406 being disposed between rollers 402 and 404. Additionally, system 400 includes a third roller 403 and a fourth roller 405, and a second cutting tool 407, with rollers 403 and 405, and cutting tool 407 being located on the opposing surface (i.e., the opposite side) of curved part 10. In some examples, cutting tool 406 is disposed at a midpoint between the first and second rollers and cutting tool 407 is disposed directed opposite cutting tool 406 as shown in Fig. 13A. Rollers 403, 405, provide support for the portion of the curved part being machined, thereby preventing unwanted deflections of the curved part. Cutting tool 407 is configured to machine the outside surface of the curved part, similar to the machining of the inside surface by cutting tool 406. With this dual cutting tool setup, the curved part can be simultaneously machined to a predetermined material thickness and local flatness on both sides.

Rollers 402 and 404 and cutting tool 406 are each coupled to a first side 409 of chassis 408 and configured to contact a first surface 410 of the curved part. Rollers 403, 405, and cutting tool 407 are each coupled to a second side 411 of chassis 408 and configured to contact a second surface 413 the curved part. In some examples, the chassis is a C-shaped chassis (see Fig. 13B), having a central portion 414 disposed along the outside edge of the curved part and from which first side 409 of the chassis extends along first surface 410 and second side 411 of the chassis extends along second surfaces 413.

As with system 100, a respective height (i.e., distance) *h* between each of the cutting tools and the chassis is adjustable, e.g., by an actuator 412. In some examples, the respective height h between each cutting tool and the chassis is configured to be adjustable in a direction normal to the respective surface 410 of the curved part.

The rollers may comprise cylindrical rollers, however other rolling systems may be utilized, such as spherical rollers, ball bearings, continuous track traction belts, etc. In some examples, at least one of the rollers may be coupled to chassis 408 via a corresponding actuator, such that a distance between the respective roller and the chassis is adjustable.

In some examples, at least one of the rollers is coupled to a sensor system. For example, the sensor system may comprise one or more load cells configured to measure a force imparted by a surface irregularity of the curved part. Additionally, or alternatively, the sensor system may comprise one or more position sensors configured to measure a roller displacement.

As with system 100, one or both of cutting tools 406 and/or 407 may be coupled to a sensor system, for example the same sensor system as the roller(s) and/or another sensor system. Accordingly, cutting tool 406 and/or cutting tool 407 may be coupled to one or more load cells configured to measure a force imparted on the cutting tool by a surface irregularity of the curved part. Additionally, or alternatively, cutting tool 406 and/or cutting tool 407 may be coupled to one or more position sensors configured to measure a displacement of the cutting tool, e.g., relative to the chassis, the curved part, or both.

System 400 may additionally include one or more position sensors configured to track the location of system 400 with respect to the curved part and/or the surrounding workspace, such as tracking system 111, described above. The tracking system may be external to and separate from the chassis. For example, the tracking system may be disposed at a location within the surrounding workspace, i.e., external to the system and the curved part. Respective heights h between the cutting tools and the chassis may be configured to be automatically adjusted based on a measured location of the cutting tool relative to the curved part in the workspace, as measured by the tracking system.

As with cutting tool 106 of system 100, cutting tools 406 and 407 of system 400 are configured to cut into curved part 10 by an adjustable depth of cut. The depth of cut being determined by the distance between the rollers, the height of the cutting tool, and the sizes/diameters of the cutting tool and the rollers.

Accordingly, by passing system 400 over surface irregularities, the surface irregularities can be removed, such that the resulting surface conforms with the desired curvature and/or desired surface profile. In some examples, the desired surface profile may be a uniform surface profile (e.g., locally flat).. Additionally, by adjusting the relative distance between the rollers, along with height of the cutting tool, the radius of the curvature or surface profile of the machined portion can be controlled. Accordingly, if system 400 is passed over the surface of curved part 10 a plurality of times (e.g., a pre-defined number of times), the surface of part 10 will be gradually machined to the radius defined by the position of the cutting tool and rollers. Furthermore, by adjusting the positions of the rollers and/or the cutting tool in concert with the above-mentioned position sensor(s), the radius of curvature machined by system 400 may be set for different locations of curved part 10, such as R₁ at angle α1 and R₂ at second angle α₂.

System 400 is coupled to a motion system 416 configured to control / position the system along the curved part. In some examples, the motion system comprises a robotic arm, e.g., a robotic arm having six degrees of freedom. In some examples, the motion system may comprise a collaborative robot (AKA a "cobot" system) or other suitable motion system(s).

### E. Fourth Illustrative Example of a System for the Surface Machining of Curved Parts

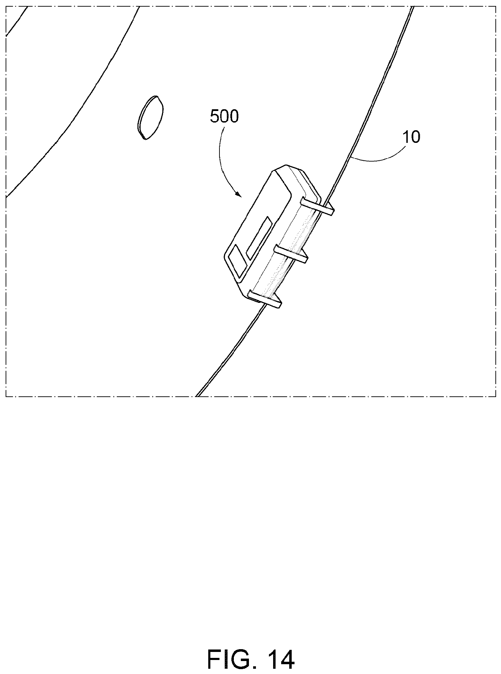

As shown in Figs. 14, this section describes a fourth illustrative example system 500 of a system for the surface machining of curved parts. System 500 is an example of system 100 described above configured to be autonomous. System 500 is configured to be substantially similar to either system 300 or system 400, i.e., having either one cutting tool and five rollers or two cutting tools and four rollers, except in the differences described below.

Instead of an external motion system such as motion system 316/416, system 500 is configured to operate autonomously, i.e., with a built-in propulsion system. In some examples, one or more of the rollers is configured to be automatically electronically controlled to provide a corresponding propulsion to system 500. Accordingly, system 500 is configured to autonomously translate along the contour of the curved part and machine the surface(s). In some examples, system 500 is configured to autonomously pass over portions of the curved part a plurality of times, for example, until the surface(s) of the curved part have been satisfactorily machined.

### F. Illustrative Method for the Surface Machining of Curved Parts

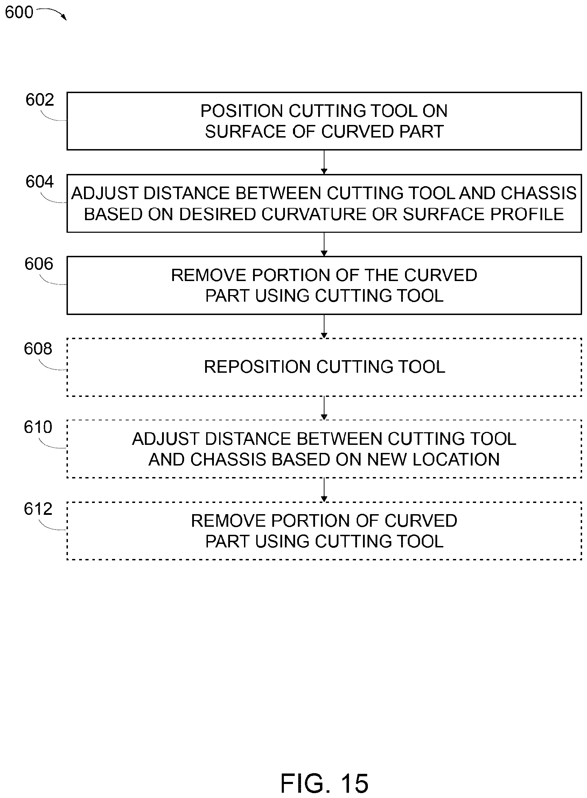

This section describes steps of an illustrative method 600 for the surface machining of a curved part; see Fig. 15. Aspects of the system(s) for the surface machining of curved parts described above may be utilized in the method steps described below. Where appropriate, reference may be made to components and systems that may be used in carrying out each step. These references are for illustration, and are not intended to limit the possible ways of carrying out any particular step of the method.

Fig. 15 is a flowchart illustrating steps performed in an illustrative method, and may not recite the complete process or all steps of the method. Although various steps of method 600 are described below and depicted in Fig. 15, the steps need not necessarily all be performed, and in some cases may be performed simultaneously or in a different order than the order shown.

Step 602 of method 600 includes positioning a cutting tool on a surface of the curved part, wherein the cutting tool is coupled to a chassis and disposed between a first roller and a second roller. In some examples, positioning the cutting tool on the surface of the curved part comprises positioning the chassis with a robotic arm.

Step 604 of method 600 includes adjusting a distance between the cutting tool and the chassis based on a desired curvature or profile of the surface at the cutting tool location.

Step 606 of method 600 includes causing the surface to comply with the desired curvature or surface profile by removing a portion of the curved part using the cutting tool.

Optional step 608 of method 600 includes repositioning the cutting tool to a second location on the curved part.

Optional step 610 of method 600 includes automatically adjusting the distance between the cutting tool and the chassis in response to the second location.

Optional step 612 of method 600 includes causing the surface to comply with a second desired curvature or second desired profile corresponding to the second location by removing a second portion of the curved part using the cutting tool.

### G. Illustrative Combinations and Additional Examples

This section describes additional aspects and features of systems for the surface machining of curved parts, presented without limitation as a series of paragraphs, some or all of which may be alphanumerically designated for clarity and efficiency. Each of these paragraphs can be combined with one or more other paragraphs, and/or with disclosure from elsewhere in this application, in any suitable manner. Some of the paragraphs below expressly refer to and further limit other paragraphs, providing without limitation examples of some of the suitable combinations.

A0. A system for surface machining of a curved part, the system including:
a chassis;
a first roller and a second roller, wherein the first and second rollers are each coupled to the chassis and configured to contact a surface of the curved part; and
a cutting tool coupled to the chassis and disposed between the first and second rollers;
wherein a distance between the cutting tool and the chassis is adjustable.

A0.1. The system of A0, wherein the first and second rollers are cylindrical.

A0.2. The system of A0 orA0.1, wherein the cutting tool is cylindrical.

A1. The system of paragraph A0, wherein at least one of the first and/or second rollers is coupled to a sensor system.

A1.1. The system of paragraph A1, wherein the sensor system comprises one or more load cells configured to measure a force imparted by a surface irregularity of the curved part.

A1.2. The system of paragraph A1 or A1.1, wherein the sensor system comprises one or more position sensors configured to measure a roller displacement.

A2. The system of any one of paragraphs A0 through A1.2, wherein the cutting tool is coupled to one or more load cells configured to measure a force imparted by a surface irregularity of the curved part.

A3. The system of any one of paragraphs A0 through A2, wherein the cutting tool is coupled to one or more position sensors configured to measure a cutting tool displacement.

A4. The system of any one of A0 through A3, wherein the distance between the cutting tool and the chassis is configured to be automatically adjusted by an actuator in response to the measured force and/or displacement.

A5. The system of any one of A0 through A4, further comprising an actuator configured to adjust the distance between the cutting tool and the chassis.

A5.1. The system of A5, wherein the actuator comprises a linear actuator.

A5.2. The system of A5, wherein the actuator is pneumatic.

A5.3. The system of A5, wherein the actuator comprises a servo drive.

A5.4. The system of A5.3, wherein the servo drive is configured to be actively controlled.

A5.5. The system of A5, wherein the actuator comprises an actively controlled electromagnetic spindle assembly.

A5.6. The system of A5, further comprising a controller, wherein the controller is configured to operate the actuator.

A5.7. The system of A5.6 wherein the controller comprises an electronic controller.

A5.8. The system of A5.6 or A5.7 wherein the controller is disposed in or on the chassis.

A6. The system of any one of paragraphs A0 through A5, wherein the cutting tool is a rotating cutting tool.

A6.1. The system of A6, wherein the rotating cutting tool comprises a milling tool.

A7. The system of A6, wherein the rotating cutting tool comprises an abrasive cutting tool.

A8. The system of A7, wherein the abrasive cutting tool comprises a belt sanding device.

A9. The system of any one of paragraphs A0 through A8, further comprising a handle and a switch configured to selectively power one or more components of the system.

A10. The system of any one of paragraphs A0 through A9, further comprising a lateral stop configured to follow an edge of the curved part during operation of the system, such that the cutting tool maintains a selected distance from the edge of the curved part.

A11. The system of any one of paragraphs A0 through A10, further comprising a jig configured to follow a rail system, such that the system is guided along the rail system.

A12. The system of any one of paragraphs A0 through A11, further comprising a jig configured to follow a flexible track, such that the system is guided along the flexible track.

A13. The system of any one of paragraphs A0 through A12, further comprising a robotic arm coupled to the chassis, wherein the system is configured such that the chassis is positionable by the robotic arm.

A14. The system of any one of paragraphs A0 through A13, wherein at least one of the first and/or second rollers is coupled to the chassis via a corresponding actuator such that a distance between the respective roller and the chassis is adjustable.

A15. The system of any one of paragraphs A0 through A14, wherein the cutting tool is disposed at a midpoint between the first and second rollers.

A16. The system of any one of paragraphs A0 through A15, wherein the distance between the cutting tool and the chassis is configured to be adjustable in a direction normal to the surface of the curved part.

A17. The system of any one of paragraphs A0 through A16, wherein the distance between the cutting tool and the chassis is configured to be automatically adjusted based on a location of the cutting tool relative to the curved part in a workspace.

A18. The system of paragraph A17, wherein the location of the cutting tool relative to the curved part in the workspace is determined by one or more position sensors.

A18.1 The system of paragraph A18, wherein the one or more position sensors are external to and separate from the chassis.

A19. The system of paragraph A17, wherein the system includes one or more vision sensors and wherein the location of the cutting tool is determined by one or more visual cues detected by the one or more vision sensors.

A19.1 The system of paragraph A19, wherein the one or more vision sensors are external to and separate from the chassis.

B0. An autonomous system for surface machining a part, the system including:
a C-shaped chassis configured to wrap around an edge of the part, such that a first portion of the chassis is disposed on a first surface of the part and a second portion of the chassis is disposed on a second surface of the part, the second surface being a reverse side of the first surface;
a first roller and a second roller each coupled to the first portion of the chassis and configured to contact the first surface;

a third roller and a fourth roller each coupled to the second portion of the chassis and configured to contact the second surface; and
a cutting tool disposed between the first and second rollers and coupled to the first portion of the chassis via an actuator, wherein the system is configured such that a distance between the cutting tool and the first portion of the chassis is adjustable using the actuator.

B1. The system of paragraph B0, wherein the part is curved, such that the first surface is an inner surface of the curved part and the second surface is an outer surface of the curved part.

B2. The system of paragraph B0 or B1, wherein at least one of the first, second, third, and fourth rollers is coupled to a sensor system.

B2.1. The system of paragraph B2, wherein the sensor system comprises one or more load cells configured to measure a force imparted by an irregularity of the first surface.

B2.2. The system of paragraph B2, wherein the sensor system comprises one or more position sensors configured to measure a roller displacement.

B3. The system of any one of paragraphs B0 through B2, wherein the cutting tool is coupled to one or more load cells configured to measure a force imparted by an irregularity of the first surface.

B4. The system of either B2 or B3, wherein the system is configured to automatically adjust the distance between the cutting tool and the first portion of the chassis using the actuator in response to the measured force.

B5. The system of any one of paragraphs B0 through B4, wherein the cutting tool is a rotating cutting tool.

B5.1. The system of B5, wherein the rotating cutting tool comprises a milling tool.

B6. The system of paragraph B5, wherein the rotating cutting tool comprises an abrasive cutting tool.

B7. The system of paragraph B6, wherein the abrasive cutting tool comprises a belt sanding device.

B8. The system of any one of paragraphs B0 through B7, wherein the actuator comprises an active-controlled servo drive.

B9. The system of any one of paragraphs B0 through B7, wherein the actuator comprises an active-controlled electromagnetic spindle assembly.

B10. The system of any one of paragraphs B0 through B7, wherein the actuator comprises a linear actuator.

B11. The system of any one of paragraphs B0 through B10, wherein the cutting tool is coupled to one or more load cells configured to measure a force imparted by an irregularity of the first surface.

B12. The system of any one of paragraphs B0 through B11, further comprising a jig configured to follow a rail system, such that the chassis is guided along the rail system.

B13. The system of any one of paragraphs B0 through B11, further comprising a jig configured to follow a flexible track, such that the chassis is guided along the flexible track.

B14. The system of any one of paragraphs B0 through B13, further comprising a robotic arm coupled to the chassis, wherein the system is configured such that the chassis is positionable by the robotic arm.

B15. The system of any one of paragraphs B0 through B14, wherein the cutting tool is a first cutting tool and the actuator is a first actuator, the system further comprising:
a second cutting tool disposed between the third and fourth rollers and coupled to the second portion of the chassis via a second actuator, such that a distance between the second cutting tool and the second portion of the chassis is adjustable.

B16. The system of any one of paragraphs B0 through B15, wherein at least one of the first, second, third, and fourth rollers is coupled to the chassis via a corresponding actuator such that a respective distance between the respective roller and the chassis is adjustable.

B17. The system of any one of paragraphs B0 through B14 further comprising:
a fifth roller coupled to the second portion of the chassis and disposed between the third and fourth rollers, such that the fifth roller is configured to contact the second surface.

B18. The system of paragraph B17, wherein at least one of the first, second, third, fourth, and fifth rollers is coupled to the chassis via a respective actuator such that a respective distance from the chassis to the respective roller is adjustable.

B19. The system of any one of paragraphs B0 through B18, wherein the cutting tool is disposed at a midpoint between the first and second rollers.

B20. The system of any one of paragraphs B0 through B19, wherein the distance between the cutting tool and the first portion of the chassis is configured to be adjustable in a direction normal to the first surface of the part.

B21. The system of any one of paragraphs B0 through B20, wherein the distance between the cutting tool and the chassis is configured to be automatically adjusted based on a location of the cutting tool relative to the curved part.

B22. The system of paragraph B21, wherein the location of the cutting tool is determined by one or more position sensors.

B22.1 The system of paragraph B22, wherein the one or more position sensors are external to and separate from the chassis.

B23. The system of paragraph B21, wherein the system includes one or more vision sensors and wherein the location of the cutting tool is determined by one or more visual cues detected by the one or more vision sensors.

B23.1 The system of paragraph B23, wherein the one or more vision sensors are external to and separate from the chassis.

C0. A method of machining the surface of a curved part, the method comprising:
positioning a cutting tool at a location on a surface of the curved part, wherein the cutting tool is coupled to a chassis and disposed between a first roller and a second roller;
   adjusting a distance between the cutting tool and the chassis based on a desired curvature or profile of the surface at the location of the cutting tool; and
causing the surface to comply with the desired curvature or surface profile by removing a portion of the curved part using the cutting tool.

C1. The method of paragraph C0, the method further comprising:
repositioning the cutting tool to a second location on the curved part;
automatically adjusting the distance between the cutting tool and the chassis in response to the second location; and
causing the surface to comply with a second desired curvature corresponding to the second location by removing a second portion of the curved part using the cutting tool.

C2. The method of paragraph C0 or C1, the method further comprising:
measuring a force or displacement imparted by a surface irregularity of the curved part using one or more load cells or position sensors/encoders coupled to at least one of the first and/or second rollers.

C2.1. The method of paragraph C0 or C1, the method further comprising:
measuring a force imparted by a surface irregularity of the curved part using one or more load cells coupled to the cutting tool.

C3. The method of any one of paragraphs C0 through C2, wherein positioning the cutting tool on the surface of the curved part comprises positioning the chassis with a robotic arm.

C4. The method of any one of paragraphs C0 through C3, the method further comprising:
automatically determining a location of the cutting tool relative to the curved part using one or more sensors.

C5 The method of paragraph C4, wherein the one or more sensors are position sensors.

C5.1 The method of paragraph C5, wherein the one or more position sensors are external to and separate from the chassis.

C6. The method of paragraph C4, wherein the one or more sensors are vision sensors, and
automatically determining the location comprises automatically determining the location using one or more visual cues detected by the one or more vision sensors.

C6.1 The method of paragraph C6, wherein the one or more vision sensors are external to and separate from the chassis.

C7. The method of paragraph C4, the method further comprising:
adjusting a first respective distance between the first roller and the chassis based on the location of the cutting tool relative to the curved part.

C7.1. The method of paragraph C7, the method further comprising:
adjusting a second respective distance between the second roller and the chassis based on the location of the cutting tool relative to the curved part.

### Advantages, Features, and Benefits

The different embodiments and examples of the system for surface machining a curved part described herein provide several advantages over known solutions for surface machining of a curved part. For example, illustrative embodiments and examples described herein allow an increase in precision and reliability of the rework process (and the general material removal process) on large curved parts.

Additionally, and among other benefits, machining time is reduced compared to known solutions and illustrative embodiments and examples described herein allow a smaller and more cost-effective solution compared to known robotic systems. Consequently, an increase in production rate and cost savings can be achieved.

Additionally, and among other benefits, illustrative embodiments and examples described herein improve the ergonomics for the worker compared to known hand sanding processes, thereby reducing the risk of work-related injuries.

Additionally, and among other benefits, since the system is directly coupled to the surface of the part that needs to be machined, e.g., with the rollers of the system being constantly in contact with the part, the system offers a direct reference to the part surface. With this reference in close distance to the cutting tool the tool infeed can be precisely set even if deflection/warpage of the large thin-walled structures appear e. g. due to local loads or gravity acting on the thin-walled part which is only partially supported in a flexible clamping system/jig. Accordingly, machining accuracy / precision is increased.

Additionally, and among other benefits, when compared to known systems for manual machining, e.g., with handheld sanding devices, systems described herein are able to mimic/recreate the curvature of the part surface and therefore follow the curvature precisely. Furthermore, in contrast to hand sanders there is also no face-to-face contact (i.e., two-dimensional contact) between the tool and the surface, but rather a line contact (i.e., one-dimensional contact), thereby enabling the tool to follow the part curvature in a geometrically well-defined way.

Additionally, and among other benefits, illustrative examples and embodiments described herein automatically control the tool infeed.

Additionally, and among other benefits, illustrative examples and embodiments described herein move directly over the surface to be machined and thus have a direct reference to the surface.

Additionally, and among other benefits, deflections of any thin-walled parts do not affect the tool engagement or the machining results.

Additionally, and among other benefits, automated adjustment of the tool infeed (e.g., with a single degree of freedom position control) enables surfaces to be machined precisely and with repeatable accuracy.

Additionally, and among other benefits, when compared to hand sanding operations, higher material removal rates are possible thereby reducing machining times.

Additionally, and among other benefits, illustrative examples and embodiments described herein utilize a rotating tool for material removal. Accordingly, decreased tool vibrations occur when compared to vibrational tools or hand sanding. This improves the ergonomics in case of a handheld device.

Additionally, and among other benefits, illustrative examples and embodiments described herein could be easily used in combination with worker assistance systems like a collaborative robot, thereby further increasing ergonomics in a semi-automated setup.

Additionally, and among other benefits, illustrative examples and embodiments described herein enable a fully automated setup the system which can be guided by any motion system (e. g. standard industrial robot, collaboration robot ("cobot"), gantry/portal system, flextrack system, rail guided system, autonomous motion system, etc.). since the stiffness and accuracy required to achieve small profile tolerances is enable by the system operating as an end effector system.

No known system or device can perform these functions. However, not all embodiments and examples described herein provide the same advantages or the same degree of advantage.

### Conclusion

The disclosure set forth above may encompass multiple distinct examples with independent utility. Although each of these has been disclosed in its preferred form(s), the specific embodiments thereof as disclosed and illustrated herein are not to be considered in a limiting sense, because numerous variations are possible. To the extent that section headings are used within this disclosure, such headings are for organizational purposes only. The subject matter of the disclosure includes all novel and nonobvious combinations and subcombinations of the various elements, features, functions, and/or properties disclosed herein. The following claims particularly point out certain combinations and subcombinations regarded as novel and nonobvious. Other combinations and subcombinations of features, functions, elements, and/or properties may be claimed in applications claiming priority from this or a related application. Such claims, whether broader, narrower, equal, or different in scope to the original claims, also are regarded as included within the subject matter of the present disclosure.

## Claims

1. A system (100) for surface machining of a, preferably curved, part (10), the system (100) including:
a chassis (108);
a first roller (102) and a second roller (104), wherein the first and second rollers (102, 104) are each coupled to the chassis (108) and configured to contact a surface (110) of the part (10); and
a cutting tool (106) coupled to the chassis (108) and disposed between the first and second rollers (102, 104);
wherein a distance between the cutting tool (106) and the chassis (108) is adjustable.

2. The system (100) of claim 1, further comprising an actuator (112) configured to adjust the distance between the cutting tool (106) and the chassis (108).

3. The system (100) of claim 1 or 2, wherein the cutting tool (106) is disposed at a midpoint between the first and second rollers (102, 104).

4. The system (100) of any of claims 1 to 3, wherein the distance between the cutting tool (106) and the chassis (108) is configured to be adjustable in a direction normal to the surface (110) of the part (10).

5. The system (100) of any of claims 1 to 4, wherein the distance between the cutting tool (106) and the chassis (108) is configured to be automatically adjusted based on a location of the cutting tool (106) relative to the part (10) in a workspace.

6. The system of claim 5, wherein the location of the cutting tool (106) relative to the part (10) in the workspace is determined by one or more position sensors.

7. The system (300, 400) of any of claims 1 to 6, wherein:
the chassis is a C-shaped chassis (308, 408) configured to wrap around an edge of the part (10), such that a first portion of the chassis (308, 408) is disposed on a first surface (310, 410) of the part (10) and a second portion of the chassis (308, 408) is disposed on a second surface (313, 413) of the part (10), the second surface (313, 413) being a reverse side of the first surface (310, 410);
the first roller (302, 402) and a second roller (304, 404) each are coupled to the first portion of the chassis (308, 408) and configured to contact the first surface (310, 410);
a third roller (303, 403) and a fourth roller (305, 405) each are coupled to the second portion of the chassis (308, 408) and configured to contact the second surface (313, 413); and
the cutting tool (306, 406) is coupled to the first portion of the chassis (308, 408) via an actuator (112), wherein the system (100) is configured such that a distance between the cutting tool (306, 406) and the first portion of the chassis (308, 408) is adjustable using the actuator (112).

8. The system (300, 400) of claim 7, wherein the part (10) is a curved part (10), such that the first surface (310, 410) is an inner surface of the curved part (10) and the second surface (313, 413) is an outer surface of the curved part (10).

9. The system (300, 400) of claim 7 or 8, further comprising a robotic arm coupled to the chassis (308, 408), wherein the system is configured such that the chassis (308, 408) is positionable by the robotic arm.

10. The system (400) of any of claims 7 to 9, wherein the cutting tool (406) is a first cutting tool (406) and the actuator (412) is a first actuator (412), the system (100) further comprising:
a second cutting tool (407) disposed between the third and fourth rollers (403, 405) and coupled to the second portion of the chassis (408) via a second actuator (412), such that a distance between the second cutting tool (407) and the second portion of the chassis (408) is adjustable.

11. The system (300) of any of claims 7 to 10, further comprising:
a fifth roller (307) coupled to the second portion of the chassis (308) and disposed between the third and fourth rollers (303, 305), such that the fifth roller (307) is configured to contact the second surface (313).

12. A method (600) of surface-machining a, preferably curved, part (10), the method (600) comprising:
positioning (602) a cutting tool (106) at a location on a surface (110) of the part (10), wherein the cutting tool (106) is coupled to a chassis (108) and disposed between two rollers (102, 104);
adjusting (604) a distance between the cutting tool (106) and the chassis (108) based on a desired curvature or surface profile of the surface (110) at the location of the cutting tool (106); and
causing the surface (110) to comply with the desired curvature or surface profile by removing (606) a portion of the part (10) using the cutting tool (106).

13. The method (600) of claim 12, the method (600) further comprising:
repositioning (608) the cutting tool (106) to a second location on the curved part (10);
automatically adjusting (610) the distance between the cutting tool (106) and the chassis (108) in response to the second location; and
causing the surface (110) to comply with a second desired curvature or second surface profile corresponding to the second location by removing (612) a second portion of the curved part (10) using the cutting tool (106).

14. The method (600) of claim 12 or 13, the method (600) further comprising:
measuring a force or displacement imparted by a surface irregularity of the curved part (10).

15. The method (600) of claim 14, wherein measuring the force is performed using one or more load cells coupled to at least one of the two rollers (102, 104); and
wherein measuring the displacement is performed using one or more encoders coupled to at least one of the two rollers (102, 104).
